# EUROPÄISCHE PATENTSCHRIFT

(11) **EP 0 793 627 B1**
(45) Veröffentlichungstag und Bekanntmachung des Hinweises auf die Patenterteilung: **05.04.2000**
(21) Anmeldenummer: 95941621.5
(22) Anmeldetag: 22.11.1995
(51) Int. Cl.: C04B 14/06, C04B 16/04, C04B 28/00

(54) **AEROGELHALTIGES VERBUNDMATERIAL, VERFAHREN ZU SEINER HERSTELLUNG SOWIE SEINE VERWENDUNG**
COMPOSITE MATERIAL CONTAINING AEROGEL, PROCESS FOR MANUFACTURING THE SAME AND THE USE THEREOF
MATERIAU COMPOSITE CONTENANT UN AEROGEL, SON PROCEDE DE FABRICATION ET SON UTILISATION

(30) Priorität: 23.11.1994 DE 4441567
(43) Veröffentlichungstag der Anmeldung: 10.09.1997
(73) Patentinhaber: CABOT CORPORATION, Boston, MA 02109 (US)
(72) Erfinder: FRANK, Dierk, D-65719 Hofheim (DE); ZIMMERMANN, Andreas, D-64347 Griesheim (DE); STUHLER, Helmut, Georg, D-90491 Nürnberg (DE)
(74) Vertreter: Luderschmidt, Schüler & Partner GbR
(86) Internationale Anmeldenummer: EP9504599
(87) Internationale Veröffentlichungsnummer: WO9615997

(56) Entgegenhaltungen:
- EP-A- 0 027 633
- EP-A- 0 340 707
- EP-A- 0 672 635
- WO-A-96/15998

## Beschreibung

Die Erfindung betrifft ein Verbundmaterial, das 10 bis 95 Vol.-% Aerogel-Partikel und mindestens ein anorganisches Bindemittel enthält, ein Verfahren zu seiner Herstellung sowie seine Verwendung.

Die meisten nicht porösen, anorganischen Feststoffe weisen eine relativ hohe Wärmeleitfähigkeit auf, da Wärme gut durch den festen Stoff geleitet wird. Um zu geringeren Wärmeleitfähigkeiten zu gelangen, verwendet man daher oft poröse Materialien, z. B. auf der Basis von Vermiculiten. Ein poröser Körper besitzt nur noch ein festes Gerüst, das Wärme gut übertragen kann, während über die Luft in den Poren, verglichen mit dem Festkörper, weniger Wärme übertragen wird.

Poren in einem Feststoff führen jedoch in der Regel zu einer Verschlechterung der mechanischen Stabilität, da Spannungen nur noch über das Gerüst übertragen werden können. Daher weisen auch poröse, aber mechanisch noch stabile Materialien eine relativ hohe Wärmeleitfähigkeit auf.

Für eine Reihe von Anwendungen wäre jedoch eine sehr geringe Wärmeleitfähigkeit in Verbindung mit guter mechanischer Festigkeit, d. h. eine hohe Druck- und Biegefestigkeit, wünschenswert. Zum einen müssen Formkörper bearbeitet werden Können, zum anderen müssen sie je nach Anwendung mechanischen Belastungen ohne Bruch oder Bildung von Rissen, auch bei erhöhten Temperaturen, standhalten können.

Aerogele, insbesondere solche mit Porositäten über 60 % und Dichten unter 0,6 g/cm³, weisen aufgrund ihrer sehr geringen Dichte, ihrer hohen Porosität und ihres geringen Porendurchmessers eine äußerst geringe thermische Leitfähigkeit auf und finden deshalb Anwendung als Wärmeisolationsmaterialien, wie zum Beispiel in der EP-A-0 171 722 beschrieben. Die geringen Porendurchmesser, unterhalb der mittleren freien Weglänge von Luftmolekülen, sind für die niedrige Wärmeleitfähigkeit von besonderer Bedeutung, da sie dazu führen, daß die Luft in den Poren eine geringere Wärmeleitfähigkeit besitzt als Luft in Makroporen. Daher ist die Wärmeleitfähigkeit von Aerogelen auch geringer als die anderer Materialien mit ähnlich großer Porosität, aber größeren Porendurchmessern, wie z. B. Schäumen oder Materialien auf der Basis von Vermiculiten.

Die hohe Porosität führt aber auch zu geringer mechanischer Stabilität sowohl des Gels, aus dem das Aerogel getrocknet wird, als auch des getrockneten Aerogels selbst.

Aerogele im weiteren Sinn, d. h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Drucks entfernt wird. Wird die Flüssigkeit des Gels dagegen unterkritisch, beispielsweise unter Bildung einer Flüssig-Dampf-Grenzphase entfernt, dann bezeichnet man das entstehende Gel vielfach auch als Xerogel. Es ist anzumerken, daß es sich bei den erfindungsgemäßen Gelen um Aerogele, im Sinne von Gel mit Luft als Dispersionsmittel handelt.

Für viele Anwendungen ist es jedoch notwendig, Aerogele in Formkörpern mit hinreichender mechanischer Stabilität einzusetzen.

In der EP-A-0 340 707 wird ein Dämmstoff der Dichte 0,1 bis 0,4 g/cm³ offenbart, der aus mindestens 50 Vol.-% Silica-Aerogel-Partikeln mit einem Durchmesser zwischen 0,5 und 5 mm besteht, die mittels mindestens einem organischen und/oder anorganischen Bindemittel miteinander verbunden sind. Die relativ grobe Körnung bewirkt, daß aus dem Dämmstoff hergestellte Formkörper eine inhomogene Verteilung des Aerogelmaterials aufweisen. Dies gilt insbesondere, wenn die kleinsten typischen Dimensionen der Formkörper, bei Folien oder Platten die Dicke, nicht sehr viel größer als der typische Aerogel-Partikel-Durchmesser ist. Vor allem in den Randbereichen würde ein erhöhter Bindemittelanteil benötigt, der sich dann negativ auf die thermische Leitfähigkeit des Formkörpers besonders an der Oberfläche auswirken würde.

Darüber hinaus würden in einem Formkörper aus diesem Dämmstoff an der Oberfläche mechanisch wenig stabile Bereiche aus Aerogelmaterial mit Durchmessern zwischen 0,5 und 5 mm entstehen, die unter mechanischen Belastungen durch Zerstörung der Aerogele an der Oberfläche schließlich zu Oberflächenunebenheiten mit Durchmessern beziehungsweise Tiefen bis zu 5 mm führen könnten.

Weiterhin ist es nicht einfach, solche Dämmstoffe mit nur einem geringen Flüssigkeitsanteil herzustellen, da mit den in der EP-A-0 340 707 angegebenen Verfahren beim Mischen die Aerogelpartikel auf Grund ihrer geringen mechanischen Festigkeit durch Schervorgänge leicht zerstört werden können.

In der EP-A-0 672 635, die gemäß Artikel 54(3) und (4) EPÜ Stand der Technik ist, wird ein Formkörper der Dichte 0,1 bis 0,4 g/cm³ offenbart, der Silica-Aerogel-Partikel mit einem mittleren Durchmesser dₘ von 0,001 bis 8 mm enthält, die mittels mindestens eines organischen oder anorganischen Bindemittels miteinander verbunden sind, wobei das Bindemittel Schichtsilikate und/oder Tonminerale enthält.

Aufgabe ist es daher, ein Verbundmaterial auf der Basis von Aerogelen bereitzustellen, das eine niedrige Wärmeleitfähigkeit und eine hohe mechanische Festigkeit aufweist.

Diese Aufgabe wird gelöst durch ein Verbundmaterial, das 10 bis 95 Vol-% Aerogel-Partikel und mindestens ein anorganisches Bindemittel enthält, das dadurch gekennzeichnet ist, daß der Teilchendurchmesser der Aerogel-Partikel kleiner als 0,5 mm ist, die Aerogel-Partikel dauerhaft hydrophobe Oberflächengruppen aufweisen und das Verbundmaterial bis zu 50 Gew.-% Schichtsilikat, bezogen auf den Anteil der anorganischen Bindemittel, enthalten kann.

Das oder die anorganischen Bindemittel bilden eine Matrix, die die Aerogelteilchen verbindet und sich als durchgehende Phase durch das gesamte Verbundmaterial zieht.

Bei einem Gehalt an Aerogel-Partikel, der signifikant unter 10 Vol.-% in der Zusammensetzung liegt, würde aufgrund des niedrigen Anteils der Aerogel-Partikel, in der Zusammensetzung die positiven Eigenschaften in hohem Maße verloren gehen. Eine solche Zusammensetzung würde nicht mehr niedrige Dichten und Wärmeleitfähigkeiten aufweisen.

Ein Gehalt an Aerogel-Partikel, der signifikant über 95 Vol.-% liegt, würde zu einem Gehalt an Bindemittel von unter 5 Vol.-% führen. In diesem Fall wäre dessen Anteil zu niedrig, um eine ausreichende Verbindung der Aerogel-Partikel untereinander sowie mechanische Druck- und Biegefestigkeit zu gewährleisten.

Vorzugsweise liegt der Anteil der Aerogel-Partikel im Bereich von 20 bis 90 Vol.-%.

Erfindungsgemäß ist der Teilchendurchmesser der Aerogel-Partikel kleiner als 0,5 mm, vorzugsweise kleiner als 0,2 mm. Der Teilchendurchmesser bezieht sich auf den mittleren Durchmesser des einzelnen Aerogel-Teilchens, da die Aerogel-Teilchen herstellungsbedingt, beispielsweise durch Mahlen, nicht notwendigerweise eine sphärische Form aufweisen müssen.

Die Verwendung kleiner Aerogel-Partikel führt zu einer homogeneren Verteilung in der Zusammensetzung, was dazu führt, daß das Verbundmaterial an allen Stellen, insbesondere auch an Oberflächen, eine nahezu einheitliche, niedrige Wärmeleitfähigkeit aufweist.

Ferner führen kleine Aerogel-Partikel bei gleichem Aerogelanteil zu verbesserter mechanischer Stabilität gegenüber Bruch- und Rißbildung, da sich unter Belastung lokal keine so großen Spannungen aufbauen können.

Aerogele können je nach Material und nach dem Typ von Oberflächengruppen auf den Porenoberflächen hydrophil oder hydrophob sein.

Kommen hydrophile Aerogele mit polaren Stoffen, insbesondere Wasser, in Form ihres Dampfes oder als Flüssigkeit in Berührung, kann je nach Dauer der Einwirkung und dem Aggregatzustand des Stoffes die Porenstruktur angegriffen werden; in ungünstigen Fällen kann ein hydrophiles Aerogel sogar kollabieren.

Diese Veränderung der Porenstruktur, insbesondere in Kollaps, führt dann unter Umständen zu einer drastischen Verschlechterung der Wärmeisolationswirkung.

Im Hinblick auf das mögliche Vorhandensein von Feuchtigkeit (durch Wasser) im Verbundmaterial, z. B. durch Kondensation von Feuchtigkeit bei Temperaturwechsel, sowie die Herstellung, bei der typischerweise Wasser verwendet wird, werden daher vorzugsweise hydrophobe Aerogele verwendet.

Besonders bevorzugt sind solche Aerogele, die auch über lange Zeiten und auch in leicht saurem Milieu hydrophob bleiben, um eine Verschlechterung der Isolationswirkung des Verbundmaterials durch Feuchtigkeit und/oder den Eir.fluß der Umgebungsluft über die für typische, aus dem Verbundmaterial hergestellte Formteile zu erwartende lange Lebensdauer zu garantieren.

Werden Aerogel-Partikel mit hydrophoben Oberflächengrupppen verwendet, erhält man bei Verwendung sehr kleiner Teilchendurchmesser eine hydrophobe Keramik, da das hydrophobe Aerogel homogen und sehr fein verteilt vorliegt.

Ein besonders hoher Anteil von Aerogel-Partikeln in dem Verbundmaterial läßt sich durch Verwendung einer bimodalen Verteilung der Korngrößen erreichen.

Als anorganisches Bindemittel können vorzugsweise Zement, Kalk oder Gips sowie Gemische derselben verwendet werden. Es sind aber auch andere anorganische Bindemittel einsetzbar, beispielsweise auf der Basis von Kieselsol.

Die anorganischen Bindemittel bieten eine ausgezeichnete Grundlage für die Herstellung von Formkörpern aus Aerogel. Bei der hydraulischen Bindung entsteht ein sehr feines Gefüge, das eine hohe Festigkeit mit sich bringt. Die Kombination von anorganischen Bindemitteln mit Aerogel verleiht dem Formkörper genau die Eigenschaften, die für Anwendungen z.B. im Baubereich gewünscht werden.

Darüber hinaus kann das Verbundmaterial mindestens noch ein ungebranntes und/oder gebranntes Schichtsilikat als anorganisches Matrixmaterial enthalten, wobei als Schichtsilikat natürlich vorkommende Schichtsilikate wie Kaoline, Tone oder Bentonite, synthetische Schichtsilikate wie Magadiit oder Keniait oder Gemische derselben verwendet werden.

Bevorzugt werden solche Schichtsilikate verwendet, die möglichst wenig Alkalien und gleichzeitig eine hohe Bildsamkeit aufweisen. Besonders bevorzugt werden Tone oder synthetische, alkalifreie (natriumfreie) Schichtsilikate, wie zum Beispiel Magadiit, verwendet.

Der Anteil des Schichtsilikats im Verbundmaterial beträgt, bezogen auf den Anteil der anorganischen Bindemittel, vorzugsweise weniger als 50 Gew.-%. Mischungen aus anorganischen Bindemitteln und Schichtsilikaten eignen sich vorzugsweise zum Gießen. Die Schichtsilikate regeln die rheologischen Eigenschaften solcher wässrigen Ansätze.

Geeignete Aerogele für das erfindungsgemäße Verbundmaterial sind solche auf Basis von Metalloxiden, die für die Sol-Gel-Technik geeignet sind (C. J. Brinker, G. W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie Melaminformaldehydkondensate (US-A-5 086 085) oder Resorcinformaldehydkondensate (US-A-4 873 218). Sie können auch auf Mischungen der obengenannten Materialien basieren. Bevorzugt verwendet werden Aerogele, enthaltend Si-Verbindungen, insbesondere SiO₂-Aerogele und ganz besonders bevorzugt SiO₂-Xerogele. Zur Reduktion des Strahlungsbeitrags der Wärmeleitfähigkeit kann das Aerogel IR-Trübungsmittel, wie z. B. Ruß, Titandioxid, Eisenoxide oder Zirkondioxid oder Mischungen derselben enthalten.

In einer bevorzugten Ausführungsform weisen die Aerogel-Partikel hydrophobe Oberflächengruppen auf. Geeignete Gruppen zur dauerhaften Hydrophobisierung sind beispielsweise trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann, wie in der WO 94/25149 beschrieben, erfolgen, oder durch Gasphasenreaktion zwischen dem Aerogel und beispielsweise einem aktivierten Trialkylsilanderivat, wie z. B. einem Chlortrialkylsilan oder einem Hexaalkyldisilazan (vergleiche R. Iler, The Chemistry of Silica, Wiley & Sons, 1979), geschehen.

Darüber hinaus gilt, daß die thermische Leitfähigkeit der Aerogele mit zunehmender Porosität und abnehmender Dichte abnimmt. Aus diesem Grund sind Aerogele mit Porositäten über 60 % und Dichten unter 0,6 g/cm³ bevorzugt. Besonders bevorzugt sind Aerogele mit Dichten unter 0,4 g/cm³

Zur Reduktion des Strahlungsbeitrags zur Wärmeleitfähigkeit kann das Verbundmaterial IR-Trübungsmittel wie zum Beispiel Ruß, Titandioxid, Eisenoxide oder Zirkondioxid sowie Mischungen derselben enthalten, was besonders für Anwendungen bei hohen Temperaturen vorteilhaft ist.

Im Hinblick auf die Rißbildung und Bruchfestigkeit kann es weiterhin vorteilhaft sein, wenn in dem Verbundmaterial Fasern enthalten sind. Als Fasermaterial können organische Fasern wie zum Beispiel Polypropylen-, Polyester-, Nylon- oder Melaminformaldehydfasern und/oder anorganische Fasern, wie zum Beispiel Glas-, Mineral- sowie SiC-Fasern und/oder Kohlenstoffasern verwendet werden.

Die Brandklasse des nach der Trocknung erhaltenen Verbundmaterials wird durch die Brandklasse des Aerogels und des anorganischen Bindemittels sowie gegebenenfalls die des Fasermaterials bestimmt. Um eine möglichst günstige Brandklasse des Verbundmaterials zu erhalten (schwer entflammbar oder unbrennbar), sollten die Fasern aus nichtbrennbarem Material, z. B. Mineral-, Glas- oder SiC-Fasern, bestehen.

Um eine Erhöhung der Wärmeleitfähigkeit durch die zugegebenen Fasern zu vermeiden, sollte
a) der Volumenanteil der Fasern 0,1 bis 30 %, vorzugsweise 1 bis 10 % betragen, und
b) die Wärmeleitfähigkeit des Fasermaterials vorzugsweise <1 W/mK, sein.

Durch geeignete Wahl von Faserdurchmesser und/oder -material kann der Strahlungsbeitrag zur Wärmeleitfähigkeit reduziert und eine größere mechanische Festigkeit erzielt werden. Dazu sollte der Faserdurchmesser vorzugsweise im Bereich von 0,1 bis 30 µm liegen.

Der Strahlungsbeitrag zur Wärmeleitfähigkeit kann besonders reduziert werden, wenn Kohlenstoffasern oder kohlenstoffhaltige Fasern verwendet werden.

Die mechanische Festigkeit kann weiter durch Länge und Verteilung der Fasern im Verbundmaterial beeinflußt werden. Bevorzugt werden Fasern eingesetzt, deren Länge zwischen 0,5 und 10 cm liegt. Für plattenförmige Formkörper können auch Gewebe aus Fasern verwendet werden.

Außerdem kann das Verbundmaterial weitere Hilfsstoffe, wie z. B. Tylose, Stärke, Polyvinylalkohol und/oder Wachsemulsionen enthalten. Sie werden im Stand der Technik großtechnisch bei der Formgebung von keramischen Massen eingesetzt.

Wird das Material in Form von flächigen Gebilden, wie z. B. Platten, verwendet, kann es auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzbarkeit zu schützen. Die Deckschichten können auch die mechanische Stabilität des Verbundstoff-Formteils verbessern. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z. B. Kunststoffolien, Metallfolien oder metallisierte Kunststoffolien, die Wärmestrahlung reflektieren. Es können aber auch poröse Deckschichten verwendet werden, die ein Eindringen von Luft in das Material ermöglichen und damit zu einer besseren Schalldämpfung führen, wie z. B. poröse Folien, Papiere, Gewebe oder Vliese. Auch das Matrixmaterial selbst kann als Deckschicht verwendet werden.

Die Deckschichten können selbst auch aus mehreren Schichten bestehen. Die Deckschichten können mit dem Bindemittel befestigt sein, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden.

Eine weitere Aufgabe der vorliegenden Erfindung ist es, ein Verfahren zur Herstellung des erfindungsgemäßen Verbundmaterials zur Verfügung zu stellen.

Diese Aufgabe wird durch ein Verfahren gelöst, bei dem man
a) die Aerogel-Partikel, das anorganische Bindemittel, das Wasser sowie gegebenenfalls Fasern, Schichtsilikat und/oder Hilfsmittel in einer Mischvorrichtung mischt,
b) die erhaltene Mischung einer Formgebung unterwirft,
c) die erhaltene Form trocknet und
d) die getrocknete Form gegebenenfalls einer Weißbearbeitung unterzieht.

Vorzugsweise werden in Schritt a) in der Mischvorrichtung zuerst die festen Bestandteile vorgelegt und dann die flüssigen Bestandteile hinzugegeben.

Besonders bevorzugt wird auf die trockene Einwaage der festen Bestandteile eine Wachsemulsion mit einem Anteil von ca. 50 % Wasser gegeben. Ein weiterer Teil der notwendigen Feuchte kann über die Zugabe von Wasserglas erreicht werden. Soweit erforderlich, wird zu dem Ansatz noch Wasser hinzugegeben.

Durch den Gehalt an Anmachwasser können die mechanischen Eigenschaften des Ansatzes verändert werden. Auch die Art, Menge und Kombination der Fasern, des Schichtsilikats und/oder der Hilfsmittel bestimmt in Wechselwirkung mit den Eigenschaften der Aerogel-Partikel und des anorganischen Bindemittels das charakteristische, rheologische Verhalten des Ansatzes.

Enthält der Ansatz Schichtsilikate, wird er vorzugsweise in einem Mischer geknetet, der auf den Ansatz scherende Kräfte ausübt. Die Scherkräfte sollen die Schichtsilikate möglichst vollständig in einzelne Plättchen aufschließen.

Bei der anschießenden Formgebung, die beispielsweise mittels eines Extrusionsprozesses durchgeführt wird, ist es dann möglich, durch die Scherkräfte und die dazu senkrecht wirkenden Formgebungskräfte die Plättchen der Schichtsilikate einzuregeln. Diese Textur steigert die mechanische Festigkeit. Für die Anwendung als Wärmedämmstoff ist sie zur Senkung der Wärmeleitfähigkeit hilfreich. Außerdem wird der Bedarf an Schichtsilikat relativ niedriger, um gleiche physikalische Eigenschaften zu erzielen.

Insbesondere Schichtsilikate können wegen ihrer plastischen Eigenschaften durch Zugabe von Wasser so eingestellt werden, daß sie extrudierfähig sind. Der Wassergehalt ist so einzustellen, daß eine gute Formbarkeit des Ansatzes gewährleistet ist. Je nach dem Wasseraufnahmevermögen des Aerogels muß der Wassergehalt erhöht werden.

In einer bevorzugten Ausführungsform wird der Ansatz durch erhöhte Zugabe von Wasser in einem Mischer bzw. Rührer homogen aufbereitet. Die Viskosität wird vorzugsweise im Bereich von 100 bis 2000 mPas eingestellt. Der Ansatz kann dann entlüftet und anschließend in die gewünschte Form gegossen werden.

Der nach der Formgebung erhaltene Körper wird getrocknet und anschließend gegebenenfalls einer Weißbearbeitung unterzogen, d. h. er wird auf das gewünschte Maß zurechtgeschnitten.

Die erfindungsgemäßen Formkörper eignen sich auf Grund ihrer geringen Wärmeleitfähigkeit als Formkörper zur Wärmedämmung. Der Körper kann je nach Anforderung als Platte, Leiste oder als unregelmäßig geformter Körper ausgeführt werden.

Die Erfindung wird im folgenden anhand von Ausführungsbeispielen näher beschrieben, wobei in allen Versuchen ein hydrophobes Aerogel auf der Basis von Tetraethylorthosilikat (TEOS), mit einer Dichte von 0,17 g/cm³ und einer Wärmeleitfähigkeit von 30 mW/mK eingesetzt wurde, das analog dem in der WO 94/25149 offenbarten Verfahren unter Verwendung von Trimethylchlorsilan hergestellt wurde.

### Beispiel 1

1000 ml Aerogel
200 g Gips α-Halbhydrat
50 g SAVC Ton
40 g Tylose FL 6000 x
250 ml Wasser
50 ml Baykiesol
werden mit einem Rührwerk in einem Behälter solange gemischt, bis die Mischung homogen erscheint, das heißt, daß mit bloßem Auge keine Differenzierung der einzelnen Bestandteile wahrgenommen werden kann.

Der Ansatz wird in eine Form gegossen und nach 3 Stunden Ruhezeit aus der Form entnommen. Der Formkörper wird einer Trocknung bei 50°C unterzogen, um überflüssige Feuchte zu entfernen. Der getrocknete Formkörper weist eine Dichte von 0,6 g/cm³ und eine Wärmeleitfähigkeit von 0,2 W/mK auf.

### Beispiel 2

1000 ml Aerogel
250 g Mikroporzement
40 g Tylose FL 6000 x
300 ml Wasser
100 ml Baykiesol
werden mit einem Rührwerk in einem Behälter solange gemischt, bis die Mischung homogen erscheint, das heißt, daß mit bloßem Auge keine Differenzierung der einzelnen Bestandteile wahrgenommen werden kann.

Der Ansatz wird in eine Form gegossen und nach 3 Stunden Ruhezeit aus der Form entnommen. Der Formkörper wird einer Trocknung bei 50°C unterzogen, um überflüssige Feuchte zu entfernen. Der getrocknete Formkörper weist eine Dichte von 0,63 g/cm³ und eine Wärmeleitfähigkeit von 0,25 W/mK auf.

### Beispiel 3

1000 ml Aerogel
50 g SAVC Ton
40 g Tylose
300 ml Baykiesol
werden mit einem Rührwerk in einem Behälter solange gemischt, bis die Mischung homogen erscheint, das heißt, daß mit bloßem Auge keine Differenzierung der einzelnen Bestandteile wahrgenommen werden kann.

Der Ansatz wird in eine Form gegossen und nach 3 Stunden Ruhezeit aus der Form entnommen. Der Formkörper wird dann 30 Minuten einer Kalzinierung bei 600 °C unterzogen. Der geglühte Formkörper weist eine Dichte von 0,45 g/cm³ und eine Wärmeleitfähigkeit von 0,15 W/mK auf.

## Patentansprüche

1. Verbundmaterial, das 10 bis 95 Vol.-% Aerogel-Partikel und mindestens ein anorganisches Bindemittel enthält, dadurch gekennzeichnet, daß der Teilchendurchmesser der Aerogel-Partikel kleiner als 0,5 mm ist, die Aerogel-Partikel dauerhaft hydrophobe Oberflächengruppen aufweisen und das Verbundmaterial bis zu 50 Gew.-% Schichtsilikat, bezogen auf den Anteil der anorganischen Bindemittel, enthalten kann.

2. Verbundmaterial gemäß Anspruch 1, dadurch gekennzeichnet, daß das anorganische Bindemitel Zement, Kalk und/oder Gips ist.

3. Verbundmaterial gemäß Anspruch 1 oder 2, dadurch gekennzeichnet, daß das Aerogel ein SiO₂-Aerogel ist.

4. Verbundmaterial gemäß mindestens einem der Ansprüche 1 bis 3, dadurch gekennzeichnet, daß die Aerogel-Partikel Porositäten über 60% und Dichten unter 0,6 g/cm³ aufweisen.

5. Verbundmaterial gemäß mindestens einem der Ansprüche 1 bis 4, dadurch gekennzeichnet, daß das Verbundmaterial 0,1 bis 30 Vol.-% Fasern enthält.

6. Verbundmaterial gemäß mindestens einem der Ansprüche 1 bis 5, dadurch gekennzeichnet, daß das Verbundmaterial Hilfsmittel enthält.

7. Verbundmaterial gemäß mindestens einem der Ansprüche 1 bis 6, dadurch gekennzeichnet, daß es eine flächige Form aufweist und auf mindestens einer Seite mit mindestens einer Deckschicht kaschiert ist.

8. Verfahren zur Herstellung eines Verbundmaterials gemäß Anspruch 1, dadurch gekennzeichnet, daß man
a) die Aerogel-Partikel, das anorganische Bindemittel, das Wasser sowie gegebenenfalls Fasern, Schichtsilikat und/oder Hilfsmittel in einer Mischvorrichtung mischt,
b) die erhaltene Mischung einer Formgebung unterwirft,
c) die erhaltene Form trocknet und
d) die getrocknete Form gegebenenfalls einer Weißbearbeitung unterzieht.

9. Verfahren gemäß Anspruch 8, dadurch gekennzeichnet, daß die Formgebung durchgeführt wird, indem man
a) durch Zugabe von Wasser die Viskosität der erhaltenen Mischung auf eine Viskosität im Bereich von 100 bis 2000 mPas einstellt,
b) den erhaltenen Ansatz gegebenenfalls entlüftet, und
c) in die gewünschte Form gießt.

10. Verwendung eines Verbundmaterials gemäß mindestens einem der Ansprüche 1 bis 7 zur Wärmedämmung.

## Revendications

1. Matériau composite contenant de 10 à 95% en volume de particules d'aérogel et au moins un liant inorganique, caractérisé en ce que le diamètre des particules d'aérogel est inférieur à 0,5 mm, les particules d'aérogel présentent durablement des groupes superficiels hydrophobes et le matériau composite peut contenir jusqu'à 50% en masse de phyllosilicate, par rapport au taux du liant inorganique.

2. Matériau composite selon la revendication 1, caractérisé en ce que le liant inorganique est le ciment, la chaux et/ou le gypse.

3. Matériau composite selon la revendication 1 ou 2, caractérisé en ce que l'aérogel est un aérogel de SiO₂.

4. Matériau composite selon l'une des revendications 1 à 3, caractérisé en ce que les particules d'aérogel présentent une porosité supérieure à 60% et une masse volumique inférieure à 0,6 g/cm³.

5. Matériau composite selon l'une des revendications 1 à 4, caractérisé en ce que le matériau composite contient de 0,1 à 30% en volume de fibres.

6. Matériau composite selon l'une des revendications 1 à 5, caractérisé en ce que le matériau composite contient des adjuvants.

7. Matériau composite selon l'une des revendications 1 à 6, caractérisé en ce qu'il présente une forme plane et est plaqué, sur au moins une face, d'au moins une couche de protection.

8. Procédé de préparation d'un matériau composite selon la revendication 1, caractérisé en ce que
a) on mélange les particules d'aérogel, le liant inorganique, l'eau ainsi qu'éventuellement des fibres, le phyllosilicate et/ou l'adjuvant dans un dispositif de mélange,
b) on soumet le mélange obtenu à un moulage,
c) on sèche la pièce obtenue et
d) éventuellement, on soumet la pièce séchée à une opération de mise aux dimensions.

9. Procédé de préparation selon la revendication 8, caractérisé en ce que l'on réalise la mise en forme
a) en ajustant la viscosité dans un domaine de 100 à 2000 mPa.s par ajout d'eau,
b) éventuellement en aérant la charge obtenue, et
c) en versant dans le moule voulu.

10. Utilisation d'un matériau composite selon au moins une des revendications 1 à 7, pour le calorifugeage.

## Claims

1. A composite material containing 10 to 95% by volume aerogel particles and at least one inorganic binder, characterised in that the particle diameter of the aerogel particles is less than 0.5 mm, the aerogel particles comprise permanently hydrophobic surface groups and the composite material may contain up to 50% by weight laminar silicate, in relation to the fraction of inorganic binder.

2. A composite material according to claim 1, characterised in that the inorganic binder is cement, lime and/or gypsum.

3. A composite material according to claim 1 or 2, characterised in that the aerogel is an SiO₂ aerogel.

4. A composite material according to at least one of claims 1 to 3, characterised in that the aerogel particles have porosities over 60% and densities below 0.6 g/cu.cm.

5. A composite material according to at least one of claims 1 to 4, characterised in that the composite material contains 0.1 to 30% by volume fibres.

6. A composite material according to at least one of claims 1 to 5, characterised in that the composite material contains adjuvants.

7. A composite material according to at least one of claims 1 to 6, characterised in that it has a flat form and is lined on at least one side with at least one outer layer.

8. A method of manufacturing a composite material according to claim 1, characterised in that
a) the aerogel particles, the inorganic binder, the water and, if applicable, fibres, laminar silicate and/or adjuvants are mixed in a mixing device,
b) the mixture obtained is subjected to shaping,
c) the form obtained is dried, and
d) the dried form is possible subjected to whitening.

9. A method according to claim 8, characterised in that the shaping is carried out in that
a) by the addition of water, the viscosity of the mixture obtained is adjusted to a viscosity in the range from 100 to 2,000 mPas,
b) the batch obtained is possibly de-aerated, and
c) poured into the required mould.

10. Use of a composite material according to at least one of claims 1 to 7 for heat insulation.
